Europäisches Patentamt

**European Patent Office**

Office européen des brevets

(19)

(11) Numéro de publication : **0 014 113**
**B1**

(12)

# FASCICULE DE BREVET EUROPÉEN

(45) Date de publication du fascicule du brevet :
28.12.83

(51) Int. Cl.³ : **F 16 L 11/11**, H 01 B 7/04,
E 21 B 17/20

(21) Numéro de dépôt : **80400030.5**

(22) Date de dépôt : **11.01.80**

(54) **Ligne de transmission flexible.**

(30) Priorité : **12.01.79 FR 7900750**

(43) Date de publication de la demande :
06.08.80 Bulletin 80/16

(45) Mention de la délivrance du brevet :
28.12.83 Bulletin 83/52

(84) Etats contractants désignés :
**DE GB LU NL SE**

(56) Documents cités :
**BE-A- 678 352**
**DE-B- 2 350 833**
**FR-A- 982 378**
**FR-A- 2 109 045**
**FR-A- 2 282 593**
**FR-E- 54 070**
**GB-A- 699 558**
**US-A- 3 162 214**
**US-A- 3 192 795**

(73) Titulaire : **COMMISSARIAT A L'ENERGIE ATOMIQUE**
**Etablissement de Caractère Scientifique Technique**
**et Industriel**
**B.P. 510**
**F-75752 Paris Cedex 15 (FR)**

**Société Tuyaux Flexibles RUDOLPH**
**41, rue de Lourmel**
**F-75015 Paris (FR)**

(72) Inventeur : **Gerardot, Claude**
**4, rue Lavoisier**
**F-78500 Sartrouville (FR)**
Inventeur : **Romero, Georges**
**1, Allée des Monegasques**
**F-91300 Massy (FR)**

(74) Mandataire : **Mongrédien, André et al**
**c/o BREVATOME 25, rue de Ponthieu**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Ligne de transmission flexible

La présente invention concerne une ligne de transmission flexible.

Cette ligne permet le transport d'échantillons de fluides liquides ou gazeux et éventuellement, la transmission de signaux électriques, à longue distance, ces échantillons liquides ou gazeux ainsi que ces signaux électriques peuvent provenir de gîtes sous-marins ou souterrains profonds, tels que des gîtes pétroliers par exemple. Cette transmission peut être continue ou discontinue.

Les lignes de transmission de fluides liquides ou gazeux et éventuellement des signaux électriques provenant de gîtes éloignés souterrains ou sous-marins, présentent généralement des structures très complexes. Elles doivent être maintenues, au cours du temps, dans un bon état de conservation et d'étanchéité et elles doivent résister à tout fluage dû à des compressions internes ou externes ; les compressions internes peuvent être provoquées par les fluides transportés et les compressions externes peuvent être provoquées, par exemple, par la pression de l'eau dans le cas de lignes sous-marines ou par des explosions souterraines, naturelles ou artificielles, dans le cas de lignes souterraines. Ces lignes de transmission ont des longueurs qui peuvent atteindre plusieurs centaines de mètres et elles doivent être flexibles pour permettre leur enroulement sur des tambours, à la surface de la terre ou de la mer. Les lignes de transmission connues ne permettent pas de résoudre tous les problèmes mentionnés plus haut et leur structure très complexe rend leur coût de fabrication très élevé.

On connaît des lignes flexibles telles que celles qui sont décrites dans les brevets US-A-3 192 795 et BE-A-678 352 et qui comprennent un conduit entouré de renforts extérieurs et contenant un câble. Ce câble, dans ces brevets, est destiné à transmettre un mouvement mécanique et ne peut malheureusement pas servir de renfort intérieur en cas de contraintes perpendiculaires à l'axe du câble. Il en résulte que les lignes décrites ne peuvent assurer la circulation correcte d'un fluide, à l'intérieur du conduit, en présence de contraintes et notamment de contraintes d'écrasement du conduit.

La présente invention a pour but de remédier à ces inconvénients et notamment de réaliser une ligne de transmission de très grande longueur, flexible, étanche présentant une très bonne résistance à l'écrasement ainsi qu'aux forces de pression internes.

L'invention a pour objet une ligne de transmission flexible comprenant un conduit de circulation de fluides et des renforts extérieurs coaxiaux audit conduit, caractérisée en ce qu'elle comprend en outre, des renforts intérieurs au conduit, ces renforts intérieurs comprenant au moins un câble, dégageant dans ce conduit, sur toute la longueur de la ligne, des espaces de circulation des fluides, les renforts extérieurs et intérieurs s'opposant aux forces de pression intérieure et extérieure audit conduit.

Selon une caractéristique particulière de l'invention, le câble de renfort intérieur est un câble souple constitué d'une âme centrale entourée de torons.

Selon une autre caractéristique de l'invention et pour un premier mode de réalisation de celle-ci, le conduit est un tube onduleux présentant la forme d'une vis creuse à pas intérieur et extérieur hélicoïdaux.

Selon une autre caractéristique de l'invention, pour ce premier mode de réalisation, le renfort extérieur de la ligne de transmission est une structure à élingues tangentes au conduit et entourées par un fourreau qui permet de maintenir le contact entre le conduit et les élingues.

Selon une autre caractéristique particulière, la structure du renfort extérieur comprend deux élingues tangentes et parallèles au conduit, de sorte que l'axe de ces élingues et l'axe du conduit, sont situés dans un même plan. Des feuillards latéraux de renforts sont disposés dans deux plans parallèles au plan axial, de part et d'autre du conduit et des élingues.

Selon une autre caractéristique de l'invention et pour un second mode de réalisation de celle-ci, la structure de renfort extérieure comprend une pluralité d'élingues tangentes au conduit et toronnées autour de ce conduit. Ces élingues peuvent être tangentes entre elles.

Selon une autre caractéristique de l'invention, et dans un troisième mode de réalisation de celle-ci, le câble intérieur au conduit est un câble antigiratoire, en contact avec ce conduit, ce câble antigiratoire comprenant, toronnées sur une âme centrale, des couches concentriques toronnées dans un sens et d'autres couches concentriques toronnées en sens inverse.

Selon une autre caractéristique de l'invention, et pour un quatrième mode de réalisation de celle-ci, des élingues jouant un rôle d'entretoises sont interposées entre le câble antigiratoire et le conduit.

D'autres caractéristiques et avantages de l'invention ressortiront mieux de la description qui va suivre, donnée à titre purement illustratif, en référence aux dessins annexés dans lesquels :

la figure 1 représente schématiquement un premier mode de réalisation d'une ligne de transmission conforme à l'invention, cette ligne de transmission étant représentée selon une coupe transversale ;

la figure 2 est une vue schématique latérale du conduit 1 de la figure 1 ;

la figure 3 représente schématiquement des feuillards latéraux de renfort de la ligne représentée sur la figure 1 ;

la figure 4 représente schématiquement un deuxième mode de réalisation d'une ligne de transmission conforme à l'invention, cette ligne étant représentée selon une coupe transversale ;

la figure 5 représente schématiquement un troisième mode de réalisation d'une ligne de transmission conforme à l'invention, cette ligne de transmission étant représentée selon une coupe transversale ;

la figure 6 représente schématiquement un quatrième mode de réalisation d'une ligne de transmission conforme à l'invention, cette ligne de transmission étant représentée selon une coupe transversale.

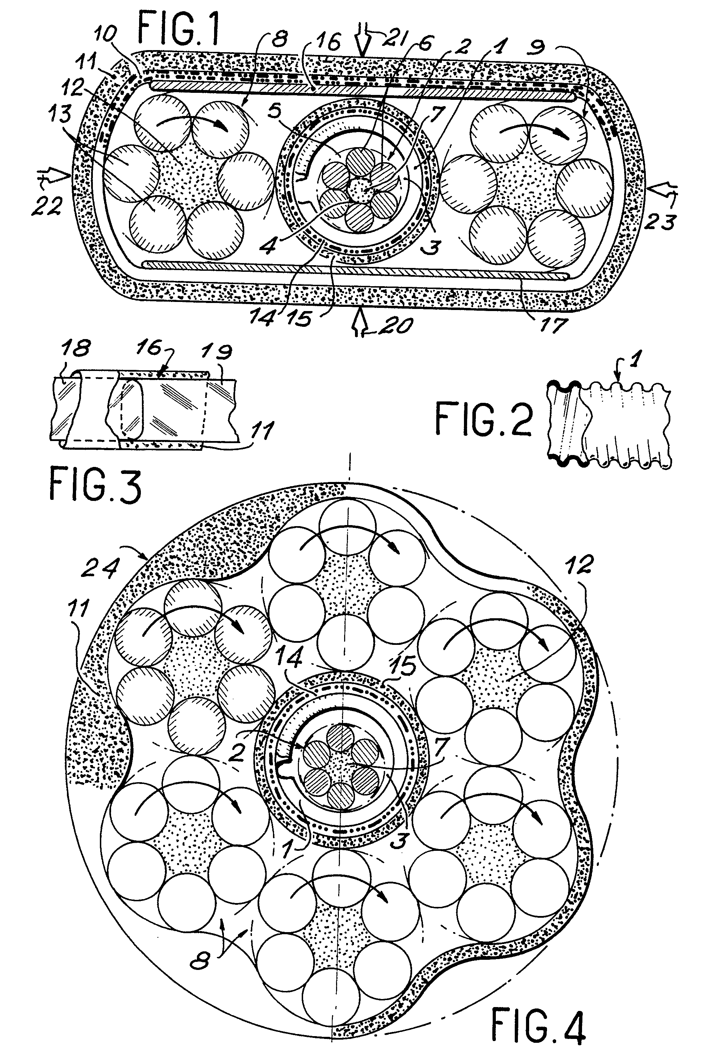

En référence à la figure 1, on a représenté selon une coupe schématique transversale, une ligne de transmission conforme à un premier mode de réalisation de l'invention. Cette ligne de transmission comprend un conduit 1, de circulation de fluides liquides ou gazeux, et des renforts intérieur et extérieur à ce conduit ; ces renforts qui seront décrits plus loin en détail permettent au conduit de résister aux forces de pression intérieure et extérieure. Le renfort intérieur comprend au moins un câble 2, intérieur au conduit ; ce câble permet d'éviter l'écrasement total du conduit ; son diamètre qui est inférieur à celui du conduit permet de dégager un espace 3 de circulation des fluides dans le conduit. En cas d'écrasement du conduit par des forces de pression extérieures, la continuité de la circulation des fluides est assurée dans les espaces tels que 4, 5 existant entre les torons 6 et entre ces torons et l'âme centrale 7 du câble 2. Le câble 2 est un câble souple, constitué de six torons entourant l'âme centrale 7. Cette âme centrale peut être constituée d'un matériau textile artificiel ou naturel tel que le chanvre par exemple. Dans certaines applications particulières pour lesquelles la ligne doit permettre, outre le transport de fluides, la transmission de signaux électriques, l'âme centrale peut être constituée par un câble électrique souple ; ce câble souple est bien entendu électriquement isolé des torons qui l'entourent et permet de transmettre des signaux électriques entre un gîte éloigné et une station d'émission ou de réception. Les torons 6 sont des torons métalliques en acier galvanisé par exemple. Ces torons peuvent être constitués de 37 fils, non représentés sur la figure. Le conduit 1 est un conduit onduleux, dont la section a la forme d'une vis creuse à pas intérieur et extérieur hélicoïdaux, assurant au conduit une bonne flexibilité, une bonne tenue aux contraintes et notamment aux forces de pression extérieures. En cas d'écrasement du conduit 1, si ce conduit vient, après déformation, en contact avec le câble 2, grâce à la coopération des pas hélicoïdaux du conduit 1 et du câble toronné 2, il subsiste toujours entre le conduit 1 et le câble 2, une zone de passage pour le fluide en circulation. Il en résulte que le câble 2 est principalement destiné à éviter grâce à sa forme toronnée, l'arrêt de la circulation des fluides, en cas d'écrasement du conduit. Ce conduit est réalisé, de préférence en acier galvanisé, ou en acier inoxydable. Les renforts extérieurs de la ligne de transmission, dans ce premier mode de réalisation, comprennent une structure à deux élingues 8, 9. Ces élingues sont tangentes au conduit 1 et sont entourées par un fourreau qui comprend une couche 10 d'un matériau tressé, recouverte par une autre couche 11 d'un matériau souple. La couche de matériau tressé est une tresse métallique, réalisée de préférence en acier inoxydable. La couche 11 de matériau souple est une couche d'un matériau synthétique tel que le polychlorure de vinyle ou le caoutchouc. Dans ce premier mode de réalisation, la structure de renfort extérieur comprend seulement deux élingues qui présentent chacune une âme centrale souple 12, entourée de torons 13. Ces élingues sont coaxiales avec le conduit 1 ; leurs axes longitudinaux ainsi que l'axe du conduit 1, sont situés dans un même plan, de sorte qu'elles sont parallèles au conduit. L'âme centrale 12 est réalisée dans un matériau souple tel que le chanvre par exemple, tandis que les torons 13 sont en acier. Chaque élingue comprend, par exemple, 5 torons de 36 fils, non représentés sur la figure. Le contact entre le conduit 1 et les élingues 8, 9 est assuré par l'intermédiaire d'une gaine de protection qui entoure ce conduit et qui comprend au moins une couche d'un matériau tressé. Dans l'exemple de réalisation représenté sur la figure, cette gaine de protection présente deux couches 14, 15 ; la couche 14 est une couche tressée d'un matériau métallique, en acier inoxydable par exemple, tandis que la couche 15 est une couche d'un matériau souple tel que le polychlorure de vinyle ou le caoutchouc par exemple. Ces deux couches assurent une bonne adhérence entre le conduit et les élingues et elles permettent en outre au conduit de mieux résister aux forces de pression internes dues aux fluides qui circulent dans le conduit. Le renforcement extérieur de la ligne est amélioré grâce à deux feuillards latéraux 16, 17, disposés dans deux plans parallèles au plan axial du conduit et des élingues, de part et d'autre de ce conduit et de ces élingues ; ces feuillards sont tangents aux élingues 8, 9 et à la gaine de protection du conduit 1 ; ils sont maintenus par la couche 10 du fourreau qui entoure le conduit et les élingues tout au long de la ligne de transmission. Ces feuillards, comme on le verra plus loin en détail, sont découpés transversalement, de manière à constituer des portions se chevauchant partiellement les unes les autres, selon une disposition dite « en écaille ». Ils sont réalisés, de préférence, en acier inoxydable ou en acier galvanisé.

En référence à la figure 2, on a représenté une vue schématique latérale du conduit 1, dont les ondulations ont une section, de préférence sinusoïdale. Ces ondulations, intérieures et extérieures, au conduit, donnent à celui-ci une section qui présente la forme d'une vis creuse à pas intérieur et extérieur hélicoïdaux.

En référence à la figure 3, on a représenté schématiquement, en vue de dessus, deux portions 18, 19 de l'un des feuillards 16 ou 17 de la figure 1. On distingue mieux sur cette figure, la disposition dite « en écaille ». Les feuillards ainsi découpés favorisent la souplesse de la ligne de transmission, très utile notamment lors de l'enroulement de cette ligne sur un tambour. Les extrémités de chaque portion de feuillard présentent une forme arrondie pour que lors de l'enroulement de la ligne sur un tambour, ces extrémités ne viennent endommager le matériau tressé 10 qui recouvre les feuillards.

Dans ce premier mode de réalisation de la ligne de transmission, la résistance aux forces de pression intérieure ou extérieure est parfaitement assurée par le câble intérieur 2, par les élingues 8, 9, les feuillards 16, 17 ainsi que par les différentes couches de matériau tressé qui entourent le conduit, les élingues et les feuillards. Lors d'une compression interne, la déformation du conduit est minimisée grâce aux ondulations qu'il présente et grâce à la couche de matériau tressé 14, aux élingues 8, 9, aux feuillards 16, 17, maintenus par la tresse 10. Lors d'une compression externe dans le sens des flèches 20, 21, par exemple, les feuillards 16, 17 prennent appui sur les élingues 8, 9 et permettent d'éviter en coopération avec les ondulations du conduit 1, l'écrasement de celui-ci. Si la compression externe survient dans le sens des flèches 22, 23, les élingues 8, 9, par l'intermédiaire des feuillards 16, 17 provoquent une rotation de 90° de l'ensemble, autour du conduit 1 ; on est alors ramené au cas des efforts dans le sens des flèches 20, 21. Il est bien évident que le conduit est aussi protégé de l'écrasement par le câble intérieur 2.

Le conduit 1 peut être fabriqué sous forme d'éléments de faible longueur, 6 mètres par exemple. Ces éléments sont raboutés par soudure plasma ou par brasure d'argent, de façon à obtenir de très grandes longueurs de conduit. Les lignes interrompues circulaires qui entourent le câble et les élingues sont des lignes fictives délimitant l'encombrement de ce câble et de ces élingues.

En référence à la figure 4, on a représenté un deuxième mode de réalisation d'une ligne de transmission conforme à l'invention. Cette ligne est représentée schématiquement en coupe transversale. Les mêmes éléments portent les mêmes références sur cette figure et sur la figure 1. Le conduit 1, le câble interne 2 et la gaine de protection constituée des couches 14 et 15 sont réalisés de la même manière que les éléments correspondants sur la figure 1. Dans ce second mode de réalisation, la structure externe de renfort comprend une pluralité d'élingues 8, présentant la même structure que les élingues 8 de la figure 1. Ces élingues sont tangentes au conduit 1 et en contact avec lui par l'intermédiaire de la gaine qui l'entoure ; elles sont de préférence tangentes entre elles et toronnées hélicoïdalement autour du conduit 1 ; six élingues ont été représentées, mais il est bien évident que leur nombre peut être différent. Elles sont maintenues par un fourreau qui comprend une couche 11 d'un matériau souple, tel que le polychlorure de vinyle ou le caoutchouc par exemple. Il est bien évident que le fourreau pourrait comprendre une couche d'un matériau tressé, non représentée sur la figure. La surface extérieure 24 de la couche 11 peut présenter soit une forme circulaire, représentée par un cercle en trait plein, soit une forme ondulée, représentée par une ligne discontinue. Dans ce mode de réalisation de la ligne de transmission, toute force de compression qui tend à écraser la ligne, contribue à arc-bouter chacune des élingues les unes contre les autres ; il en résulte que ces élingues s'opposent à l'écrasement du conduit central. Comme les élingues sont disposées coaxialement avec le conduit central, si l'une des élingues s'écrase, en prenant une forme plus ou moins ellipsoïdale dont le grand axe est perpendiculaire à la direction axiale du conduit, les deux élingues qui l'entourent tendent à se déformer dans une direction perpendiculaire à la surface de contact avec l'élingue centrale. La force de compression sur le conduit est donc amortie. Il résulte de cette structure que les efforts externes de compression sont dispersés dans les différentes élingues. Comme pour la ligne représentée sur la figure 1, les âmes centrales 7 et 12 du câble 2 et les élingues 8 sont souples ; ces âmes centrales peuvent être réalisées dans une matière textile telle que le chanvre. Pour certaines applications particulières, l'âme centrale 7 du câble 2 peut être un câble électrique souple, électriquement isolé des torons qui l'entourent et destiné à la transmission de signaux électriques.

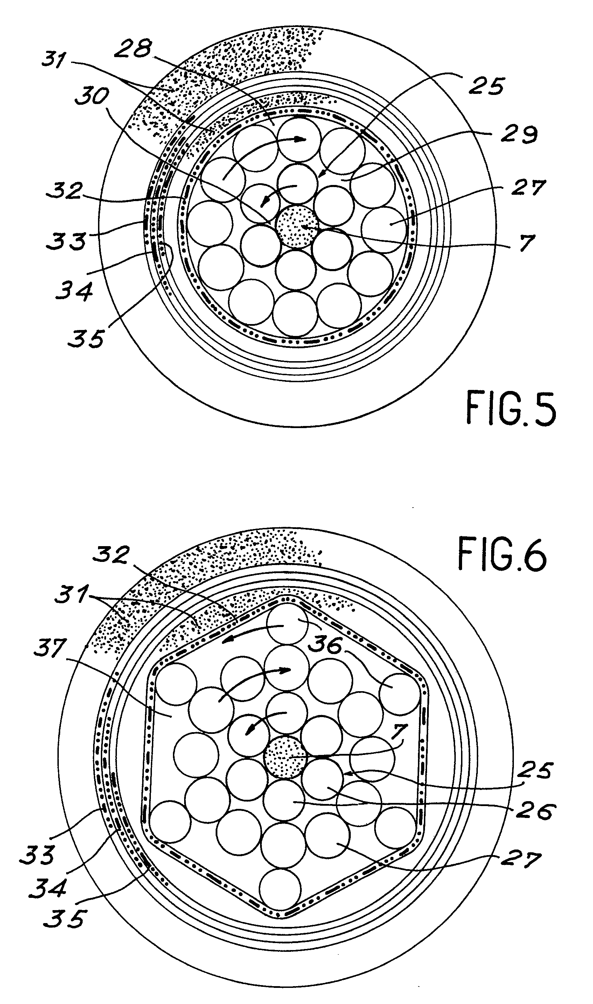

En référence à la figure 5, on a représenté un troisième mode de réalisation d'une ligne de transmission conforme à l'invention.

Dans ce mode de réalisation, le renfort intérieur est constitué par un câble 25, de type « antigiratoire », en contact avec le conduit de circulation de fluide. La structure de ce conduit sera décrite plus loin en détail. Le câble « antigiratoire » comprend plusieurs couches concentriques de torons 26, 27, autour de l'âme centrale 7. D'une manière plus générale, le câble « antigiratoire » 25, comprend, toronnées sur une âme centrale, un certain nombre de couches toronnées dans un sens, et un autre nombre de couches, qui n'est pas nécessairement le même que le premier, toronnées dans l'autre sens. Ce câble antigiratoire empêche les rotations de la ligne de transmission autour de son axe lorsque cette ligne est en charge. Il est réalisé de façon connue, par un toronnage de torons 26 autour de l'âme centrale, dans un premier sens, et par un toronnage de torons 27, dans un deuxième sens, inverse au premier. Outre sa propriété antigiratoire, l'intérêt principal de ce câble est de présenter une porosité voisine de 30 % de sa section et donc d'offrir au fluide circulant une plus grande section de passage. Cette porosité apparaît nettement sur la figure et elle est due aux intervalles tels que 28, 29, 30, entre les torons du câble et entre les torons de la couche externe et le conduit. Comme dans les modes de réalisation précédents, les torons du câble 25 peuvent être constitués de fils d'acier, de préférence inoxydables ou galvanisés. L'âme centrale 7 du câble est constituée par un toron et peut aussi être constituée par un câble électrique, isolé électriquement des torons qui l'entourent et qui permet la transmission de signaux électriques, dans certaines applications particulières.

Le conduit 31 qui permet la circulation des fluides est constitué par une couche d'un matériau souple qui entoure le câble 25. Cette ligne de transmission, comme dans les modes de réalisation précédents, présente aussi des renforts extérieurs qui comprennent notamment un fourreau 32, interposé entre le conduit 31 et le câble 25. Ce fourreau est constitué d'un matériau tressé, métallique, en acier inoxydable ou galvanisé, par exemple. Les renforts extérieurs de la ligne de transmission comprennent aussi au moins une couche de renfort noyée dans le matériau du conduit 31 constituant le conduit. Sur la figure, trois de ces couches 33, 34, 35 noyées dans le matériau du conduit 31, ont été représentées. Elles sont constituées de tresses métalliques, en acier galvanisé ou inoxydable par exemple. Le matériau du conduit 31 est du polychlorure de vinyle ou du caoutchouc par exemple. Il est bien évident que le nombre des couches de renforts peut être différent et que leur emplacement à l'intérieur du matériau du conduit 31 peut être différent. Ces couches peuvent éventuellement être séparées à l'intérieur de la couche 31. Il est bien évident aussi que dans l'exemple de réalisation représenté, le câble antigiratoire ne comprend que deux couches de torons, mais que le nombre de ces couches pourrait être plus important. Quelles que soient les forces extérieures de compression, le fluide peut continuer à circuler à l'intérieur du conduit, en raison de sa grande porosité résultant principalement de la structure du câble antigiratoire qu'il contient. Les torons 26, 27 du câble antigiratoire peuvent être constitués de la même manière que les torons 6 du câble 2 de la figure 1.

En référence à la figure 6, on a représenté un quatrième mode de réalisation d'une ligne de transmission conforme à l'invention. Cette ligne de transmission est représentée sur cette figure en coupe transversale et les mêmes éléments portent les mêmes références sur cette figure et sur la figure 4. Le câble antigiratoire 25 est constitué de la même façon que le câble antigiratoire de la figure précédente, par deux couches de torons 26, 27, toronnées en sens inverse autour de l'âme centrale 7. Ces torons et cette âme centrale sont constitués dans les mêmes matériaux que le toron et l'âme centrale décrits dans la figure 4. Dans ce quatrième mode de réalisation de la ligne de transmission conforme à l'invention, des élingues 36, tangentes au câble antigiratoire 25 et espacées entre elles, sont toronnées autour du câble 25 et sont maintenues par le fourreau 32, constitué comme dans le cas précédent, par une tresse métallique. Ces élingues forment des entretoises de contact entre le câble antigiratoire et le conduit. Elles sont destinées à augmenter la porosité du conduit, par création d'un espace supplémentaire 37, entre ce conduit et le câble antigiratoire. On retrouve, comme dans le mode de réalisation précédent, le conduit 31 et les renforts constitués par les couches de matériau tressé 33, 34, 35. Les élingues 36 sont de préférence, régulièrement espacées autour du câble antigiratoire. Elles sont constituées de fils d'acier inoxydable ou galvanisé et le sens de leur toronnage est de préférence inverse de celui de la couche de torons 27 du câble antigiratoire. Leur nombre a été limité à six dans l'exemple de réalisation représenté sur la figure, mais il est bien évident que ce nombre peut être plus ou moins important. La ligne de transmission représentée dans ce quatrième mode de réalisation assure une meilleure circulation des fluides, grâce à la présence des élingues 36 qui permet d'augmenter notablement la section de passage du fluide.

Pour les modes de réalisation de la ligne de transmission, représentés sur les figures 5 et 6, il est possible de fabriquer des lignes de très grande longueur, 1 000 mètres par exemple, qui peuvent être facilement enroulées grâce à leur souplesse, autour de tambours. Dans l'exemple de réalisation représenté sur la figure 6, toute force de compression externe ne peut empêcher la circulation des fluides, du fait de la présence du câble antigiratoire et des élingues, qui assurent au conduit une porosité satisfaisante.

La ligne de transmission qui vient d'être décrite permet bien d'atteindre les buts mentionnés plus haut et notamment d'assurer la continuité de la circulation des fluides à l'intérieur de la ligne, quelles que soient les forces d'écrasement auxquelles cette ligne peut être soumise.

Il est bien évident que dans les différents modes de réalisation qui ont été décrits, les moyens utilisés auraient pu être remplacés par des moyens équivalents, sans sortir du cadre de l'invention.

**Revendications**

1. Ligne de transmission flexible comprenant un conduit (1) de circulation de fluides et des renforts (8, 9) extérieurs coaxiaux audit conduit, caractérisé en ce qu'elle comprend en outre des renforts intérieurs (2) au conduit, ces renforts intérieurs (2) comprenant au moins un câble, dégageant dans ce conduit (1), sur toute la longueur de la ligne, des espaces (5) de circulation des fluides, les renforts extérieurs (8, 9, 16, 17) et intérieurs (2) s'opposant aux forces de pression intérieure et extérieure audit conduit.

2. Ligne de transmission flexible selon la revendication 1, caractérisée en ce que ledit câble intérieur (2) est un câble souple constitué d'une âme centrale (7) entourée de torons (6).

3. Ligne de transmission flexible selon la revendication 2, caractérisée en ce que ledit conduit (1) est un tube onduleux dont la section longitudinale présente la forme d'une vis creuse à pas intérieur et extérieur hélicoïdaux.

4. Ligne de transmission flexible selon la revendication 3, caractérisée en ce que ledit renfort extérieur (8, 9) est une structure à élingues tangentes au conduit et entourées par un fourreau (10, 11) pour maintenir le contact entre le conduit (1) et les élingues (8, 9).

5. Ligne de transmission flexible selon la revendication 4, caractérisée en ce qu'une gaine de protection (14, 15) entoure le conduit, entre le conduit et les élingues.

6. Ligne de transmission flexible selon la revendication 5, caractérisée en ce que lesdites élingues (8, 9) comprennent une âme centrale (12) souple entourée de torons (13).

7. Ligne de transmission flexible selon la revendication 6, caractérisée en ce que ladite structure à élingues comprend deux élingues (8, 9) tangentes et parallèles audit conduit (1), les axes de ces élingues et l'axe du conduit étant situés dans un même plan axial.

8. Ligne de transmission flexible selon la revendication 6, caractérisée en ce que ladite structure à élingues comprend une pluralité d'élingues (8) tangentes audit conduit (1) et toronnées autour de ce conduit.

9. Ligne de transmission flexible selon la revendication 7, caractérisée en ce que des feuillards latéraux (16, 17) de renfort sont disposés dans deux plans parallèles au plan axial, de part et d'autre du conduit (1) et des élingues (8, 9) de manière à être tangents auxdites élingues et à la gaine de protection du conduit, ces feuillards étant pris dans le fourreau (10, 11) tout au long de ladite ligne.

10. Ligne de transmission flexible selon la revendication 9, caractérisée en ce que chaque feuillard (16, 17) est découpé transversalement, de façon à constituer des portions de feuillard se chevauchant partiellement les unes et les autres, selon une disposition dite « en écaille ».

11. Ligne de transmission flexible selon la revendication 8, caractérisée en ce que les élingues (8) de ladite pluralité sont tangentes entre elles.

12. Ligne de transmission flexible selon l'une quelconque des revendications 10 et 11, caractérisée en ce que la gaine de protection (14, 15) entourant ledit conduit comprend au moins une couche (14) d'un matériau tressé.

13. Ligne de transmission flexible selon la revendication 12, caractérisée en ce que ledit fourreau comprend une couche (11) d'un matériau souple.

14. Ligne de transmission flexible selon la revendication 13, caractérisée en ce que la gaine de protection entourant ledit conduit comprend en outre un revêtement souple (11) recouvrant la couche (10) de matériau tressé.

15. Ligne de transmission flexible selon la revendication 13, caractérisée en ce que ledit fourreau comprend en outre une couche d'un matériau tressé (10), recouverte par la couche (11) de matériau souple.

16. Ligne de transmission flexible selon la revendication 2, caractérisée en ce que ledit câble intérieur est un câble « antigiratoire » (7, 25, 27) en contact avec ledit conduit, comportant toronnées sur une âme (7) centrale des couches concentriques (25, 27) toronnées dans un sens et d'autres couches concentriques toronnées en sens inverse.

17. Ligne de transmission flexible selon la revendication 16, caractérisée en ce que lesdits renforts extérieurs comprennent : au moins un fourreau interposé entre le conduit (31) et le câble « antigiratoire », ledit fourreau comprenant au moins une couche (32) d'un matériau tressé, au moins une couche de renfort (33, 34, 35) constituée d'un matériau tressé, noyée dans la couche (31) de matériau souple dudit conduit.

18. Ligne de transmission flexible selon la revendication 17, caractérisée en ce que des élingues (36) tangentes au câble antigiratoire et espacées entre elles sont toronnées autour de ce câble et sont maintenues par ledit fourreau (32), ces élingues constituant des entretoises de contact entre le câble antigiratoire et le conduit (31).

19. Ligne de transmission flexible selon l'une quelconque des revendications 14 et 18, caractérisée en ce que l'âme centrale (7) du câble intérieur est un câble électriquement isolé des torons qui l'entourent et apte à véhiculer des signaux électriques.

**Claims**

1. Flexible transmission line comprising a fluid-circulation conduit (1) and external reinforcing members (8, 9) coaxial with said conduit, characterized in that it additionally comprises internal reinforcing members (2) comprising at least one cable in communication with the conduit (1) over the entire length of the line, and fluid-circulation spaces (5), the external (8, 9, 16, 17) and internal (2) reinforcing members opposing pressures interior and exterior of the said conduit.

2. Flexible transmission line according to claim 1, characterized in that said internal cable (2) is a flexible cable comprising a central core (7) surrounded by strands (6).

3. Flexible transmission line according to claim 2, characterized in that said conduit (1) is a corrugated tube whose longitudinal section is in the form of a hollow screw with helicoidal internal and external threads.

4. Flexible transmission line according to claim 3, characterized in that said external reinforcing member (8, 9) is a sling structure tangential to the conduit and surrounded by a sleeve (10, 11) to maintain contact between the conduit (1) and the slings (8, 9).

5. Flexible transmission line according to claim 4, characterized in that a protective sheath (14, 15) surrounds the conduit, between the conduit and the slings.

6. Flexible transmission line according to claim 5, characterized in that said slings (8, 9) comprise a flexible central core (12) surrounded by strands (13).

7. Flexible transmission line according to claim 6, characterized in that said sling structure comprises two slings (8, 9), tangential and parallel to said conduit (1), the axes of the slings and the axis of the conduit being located in the same axial plane.

8. Flexible transmission line according to claim 6, characterized in that said sling structure comprises a plurality of slings (8) tangential to said conduit (1) and laid as strands around said conduit.

9. Flexible transmission line according to claim 7, characterized in that lateral reinforcing strips (16, 17) are disposed in two planes, parallel to the axial plane, on either side of the conduit (1) and slings (8, 9), tangential to said slings and the protective sheath of the conduit, said strips being internal of the sleeve (10, 11) over the entire length of said line.

10. Flexible transmission line according to claim 9, characterized in that each strip (16, 17) is slit transversely to provide strip portions partially overlapping one another in a scale-like manner.

11. Flexible transmission line according to claim 8, characterized in that the slings (8) of said plurality are mutually tangential.

12. Flexible transmission line according to either of claims 10 and 11, characterized in that the protective sheath (14, 15) surrounding said conduit comprises at least one layer (10) of braided material.

13. Flexible transmission line according to claim 12, characterized in that the said sleeve comprises a layer (11) of flexible material.

14. Flexible transmission line according to claim 13, characterized in that the protective sheath surrounding said conduit additionally comprises a flexible covering (11) on the layer (10) of braided material.

15. Flexible transmission line according to claim 13, characterized in that the said sleeve additionally comprises a layer of braided material (10) covered by the layer (11) of flexible material.

16. Flexible transmission line according to claim 2, characterized in that said internal cable is an « anti-twisting » cable (7, 25, 27) in contact with said conduit, comprising concentric layers (25, 27) wound in one sense, and other concentric layers wound in the opposite sense around a core (7).

17. Flexible transmission line according to claim 16, characterized in that said external reinforcing members comprise : at least one sleeve interposed between the conduit (31) and the « anti-twisting » cable, said sleeve comprising at least one layer (32) of braided material, and at least one reinforcing layer (33, 34, 35) of a braided material, buried in the layer of flexible material of said conduit.

18. Flexible transmission line according to claim 17, characterized in that the slings (36) tangential to the anti-twisting cable and mutually spaced are wound around the cable and held by said sleeve (32), the said slings constituting contact bracing members between the anti-twisting cable and the conduit (31).

19. Flexible transmission line according to either of claims 14 and 18, characterized in that the central core (7) of the internal cable is electrically insulated from the strands that surround it, and adapted to carry electrical signals.

**Ansprüche**

1. Flexible Übertragungsleitung mit einer von einem Strömungsmittel durchströmbaren Leitung (1) und mit der genannten Leitung koaxialen äußeren Verstärkungen (8, 9), dadurch gekennzeichnet, daß sie im Inneren der Leitung zusätzliche Verstärkungen (2) aufweist, daß die inneren Verstärkungen (2) wenigstens ein Kabel aufweisen, welches im Inneren der Leitung (1) über die gesamte Länge der Übertragungsleitung Hohlräume (5) für die Strömung von Strömungsmitteln offenhält, und daß die äußeren und inneren Verstärkungen (8, 9, 16, 17 bzw. 2) von innen und von außen auf die Leitung einwirkenden Druckkräften entgegenwirken.

2. Flexible Übertragungsleitung nach Anspruch 1, dadurch gekennzeichnet, daß das innere Kabel (2) ein schmiegsames Kabel ist, welches aus einer mittigen Seele (7) und diese umgebenden Litzen (6) gebildet ist.

3. Flexible Übertragungsleitung nach Anspruch 2, dadurch gekennzeichnet, daß die Leitung (1) ein gewelltes Rohr ist, welches im Längsschnitt die Form einer hohlen Schraube mit entlang Schraubenlinien verlaufenden Gängen an der Innen- und der Außenseite hat.

4. Flexible Übertragungsleitung nach Anspruch 3, dadurch gekennzeichnet, daß die äußere Verstärkung (8, 9) eine Anordnung von die Leitung tangierenden Seilen aufweist, welche von einem Mantel (10, 11) umgeben ist, um die Seile (8, 9) in Kontakt mit der Leitung (1) zu halten.

5. Flexible Übertragungsleitung nach Anspruch 4, dadurch gekennzeichnet, daß die Leitung von einer zwischen ihr und den Seilen angeordneten Schutzhülle (14, 15) umgeben ist.

6. Flexible Übertragungsleitung nach Anspruch 5, dadurch gekennzeichnet, daß die Seile (8, 9) jeweils eine mittige, schmiegsame Seele (12) und diese umgebende Litzen (13) aufweisen.

7. Flexible Übertragungsleitung nach Anspruch 6, dadurch gekennzeichnet, daß die Anordnung von Seilen zwei Seile (8, 9) aufweist, welche die Leitung (1) tangierend parallel zu dieser angeordnet sind, wobei die Achsen der Seile und die Achse der Leitung in einer gleichen axialen Ebene angeordnet sind.

8. Flexible Übertragungsleitung nach Anspruch 6, dadurch gekennzeichnet, daß die Anordnung von Seilen eine Vielzahl von Seilen (8) umfaßt, welche die Leitung (1) tangierend nach Art von Litzen um diese herum angeordnet sind.

9. Flexible Übertragungsleitung nach Anspruch 7, dadurch gekennzeichnet, daß in zwei zur axialen Ebene parallelen Ebenen beiderseits der Leitung (1) und der Seile (8, 9) seitliche Verstärkungsbänder (16, 17) derart angeordnet sind, daß sie die Seile sowie die Schutzhülle der Leitung tangieren, wobei die Bänder über die gesamte Länge der Übertragungsleitung in dem Mantel (10, 11) festgehalten sind.

10. Flexible Übertragungsleitung nach Anspruch 9, dadurch gekennzeichnet, daß jedes Verstärkungsband (16, 17) in Querrichtung zerschnitten ist, so daß eine Anzahl von sich schuppenartig teilweise überlappenden Bandstücken vorhanden ist.

11. Flexible Übertragungsleitung nach Anspruch 8, dadurch gekennzeichnet, daß die Seile (8) der Vielzahl von Seilen einander tangieren.

12. Flexible Übertragungsleitung nach Anspruch 10 oder 11, dadurch gekennzeichnet, daß die die Leitung umgebende Schutzhülle (14, 15) wenigstens eine Lage (14) aus einem geflochtenen Material aufweist.

13. Flexible Übertragungsleitung nach Anspruch 12, dadurch gekennzeichnet, daß der Mantel eine Lage (11) aus einem schmiegsamen Material aufweist.

14. Flexible Übertragungsleitung nach Anspruch 13, dadurch gekennzeichnet, daß die die Leitung umgebende Schutzhülle außerdem eine die Lage aus geflochtenem Material (10) überdeckende, schmiegsame Umkleidung (11) aufweist.

15. Flexible Übertragungsleitung nach Anspruch 13, dadurch gekennzeichnet, daß der Mantel außerdem eine Lage aus einem geflochtenen Material (10) aufweist, welche von der Lage (11) aus schmiegsamem Material überdeckt ist.

16. Flexible Übertragungsleitung nach Anspruch 2, dadurch gekennzeichnet, daß das innere Kabel ein « verdrillungssicheres » Kabel (7, 25, 27) ist, welches in Kontakt mit der Leitung steht und auf einer mittig verlaufenden Seele (7) konzentrisch angeordnete Lagen (25, 27) von in einer Richtung gedrillten Litzen und von gegensinnig dazu gedrillten Litzen aufweist.

17. Flexible Übertragungsleitung nach Anspruch 16, dadurch gekennzeichnet, daß die äußeren Verstärkungen wenigstens eine zwischen der Leitung (31) und dem « verdrillungssicheren » Kabel angeordnete Hülle aufweisen, welche ihrerseits wenigstens eine Lage (32) aus einem geflochtenen Material aufweist, und daß wenigstens eine Verstärkungslage (33, 34, 35) aus einem geflochtenen Material in die Lage (31) aus schmiegsamem Material der Leitung eingebettet ist.

18. Flexible Übertragungsleitung nach Anspruch 17, dadurch gekennzeichnet, daß die das verdrillungssichere Kabel tangierend in gegenseitigem Abstand angeordneten Seile (36) litzenartig um das Kabel herumgelegt und von der Hülle (32) festgehalten sind, so daß sie Kontaktbrücken zwischen dem verdrillungssicheren Kabel und der Leitung darstellen.

19. Flexible Übertragungsleitung nach einem der Ansprüche 14 oder 18, dadurch gekennzeichnet, daß die mittige Seele (7) des inneren Kabels ein von den es umgebenden Litzen elektrisch isoliertes Kabel ist, welches für die Leitung von elektrischen Signalen geeinget ist.

FIG.1

FIG.2

FIG.3

FIG.4

FIG.5

FIG.6